# EUROPÄISCHE PATENTSCHRIFT

(11) **EP 3 394 960 B1**
(45) Veröffentlichungstag und Bekanntmachung des Hinweises auf die Patenterteilung: **06.07.2022**
(21) Anmeldenummer: 16820251.3
(22) Anmeldetag: 21.12.2016
(51) Int. Cl.: H02K 5/128, H02K 5/124, F04D 13/06, H02K 19/14, H02K 1/24, F04D 1/00, H02K 1/27, H02K 1/04

(54) **KREISELPUMPE, INSBESONDERE UMWÄLZPUMPE**
CENTRIFUGAL PUMP, IN PARTICULAR CIRCULATION PUMP
POMPE CENTRIFUGE, NOTAMMENT POMPE DE CIRCULATION

(30) Priorität: 22.12.2015 DE 102015016685
(43) Veröffentlichungstag der Anmeldung: 31.10.2018
(73) Patentinhaber: KSB SE & Co. KGaA, 67227 Frankenthal (DE)
(72) Erfinder: HAUCK, Patrick, 67227 Frankenthal (DE); SCHULLERER, Joachim, 67227 Frankenthal (DE)
(86) Internationale Anmeldenummer: PCT/EP2016/082082
(87) Internationale Veröffentlichungsnummer: WO 2017/108893

(56) Entgegenhaltungen:
- EP-A1- 1 659 672
- EP-A2- 1 626 478
- EP-A2- 2 645 542
- WO-A1-2011/099603
- US-A- 3 862 446
- US-A1- 2003 057 797
- US-A1- 2009 015 084

## Beschreibung

Die Erfindung betrifft eine Kreiselpumpe, insbesondere eine Umwälzpumpe, mit einem durch einen Elektromotor angetriebenen Pumpenlaufrad.

Kreiselpumpen, insbesondere Umwälzpumpen kommen in Wohn-, Büro- und Gewerbegebäuden für den Transport von Trink-, Heiz- und Kühlwasser zwischen Wärmeerzeugern und Wärmeverbrauchern zum Einsatz. Zum Beispiel werden in Einfamilienhäusern bis zu drei Umwälzpumpen eingesetzt, nämlich zum Transport von Heizwasser ("Heizungspumpe"), zur Zirkulation warmen Trinkwassers ("Zirkulationspumpe") und zum Transport solarthermischer Medien ("Solarpumpe"). In infrastrukturellen Komplexen (z. B. Flughäfen) kommen mehrere tausend Umwälzpumpen in einer weit verzweigten Installation zum Einsatz.

Als Umwälzpumpe wird ein integriertes Aggregat bezeichnet, bestehend aus der Pumpe zur Übertragung von Energie an das flüssige Wärmeträgermedium und bestehend aus dem in die Pumpe integrierten Elektromotor, der das Pumpenlaufrad antreibt. Durch die von der EU erlassenen ErP-Richtlinie (Energy related Products-Richtlinie) sind Mindestwirkungsgrade für Umwälzpumpen vorgegeben, die seit 2013 einzuhalten sind. Aufgrund dieser Vorgaben bestehen heute am Markt erhältliche Umwälzpumpen aus einer Pumpenstufe, einem permanentmagneterregten Synchronmotor und einem Frequenzumformer.

Bei den festgelegten Rahmenbedingungen für die Entwicklung von Umwälzpumpen zu höherer Energieeffizienz lag der Fokus der EU und der Hersteller jedoch nicht auf der Ressourceneffizienz der Aggregate. Stattdessen gingen die Hersteller dazu über, bei der Produktion der elektrischen Pumpenantriebe und der elektrischen Komponenten den Materialeinsatz signifikant zu erhöhen, um dadurch die strengen EU-Vorgaben zu erfüllen. Der Übergang von Elektromotoren in Asynchrontechnik oder mit "normalen" Permanentmagneten aus Ferrit zu Elektromotoren mit Hochleistungs-Permanentmagneten aus den Selten-Erden-Metallen wie Neodym-Eisen-Bor oder Samarium-Cobalt ermöglichte durch die dadurch bedingte Erhöhung der magnetischen Flussdichte die notwendige Wirkungsgradsteigerung. Unter anderem erlaubt der Einsatz dieser Hochleistungspermanentmagnete einen Abstand zwischen Rotoraußendurchmesser (Magnetoberfläche) und Statorinnendurchmesser (auch als Bohrungsdurchmesser bezeichnet), der genügend Platz für ein Spaltrohr und eine Rotorhülse bietet, wie sie üblicherweise in Umwälzpumpen eingesetzt werden. Hersteller verwenden für Permanentmagnete heute daher ausschließlich diese verhältnismäßig teuren Materialien, deren Abbau ökologisch äußerst fragwürdig ist.

Die EP 1 626 478 A2 offenbart eine Umwälzpumpe mit einem Motor, der als Nassläufer ausgebildet ist.

Die WO 2011/099603 A1 zeigt eine Spaltrohrmotorpumpe mit einem Spaltrohr aus faserverstärktem Kunststoff.

Die US 2009/015084 A1 offenbart einen Elektromotor mit einer Rotorabdeckung, die eine Abdeckkappe umfasst.

Die US 3 862 446 A zeigt einen zweipoligen Synchronreluktanzmotor mit zusätzlichen Leiterstäben zur Verbesserung der Anlaufeigenschaften.

Die EP 1 659 672 A1 offenbart eine Statoranordnung für eine elektrische Maschine, bei der die Statorzähne an ihren freien Enden mit einer Hülse gekoppelt sind, die sich koaxial zu dem Statorkörper erstreckt.

Die EP 2 645 542 A2 zeigt einen Spaltrohrmotor mit einem nicht leitenden Spalttopf, wobei der Spalttopf so konfiguriert ist, dass er Statorkern und Rotor voneinander trennt.

Die US 2003/057797 A1 offenbart einen Stator für eine rotierende elektrische Maschine, wobei die Statorstruktur so ausgeführt ist, dass sie durch magnetischen Streufluß verursachte Leistungseinbußen eindämmt.

Ziel der vorliegenden Erfindung ist es daher, eine Kreiselpumpe, insbesondere eine Umwälzpumpe zu entwickeln, die den Vorgaben der EU-Richtlinien hinsichtlich des Wirkungsgrades gerecht wird, die jedoch auch ohne die vorgenannten Selten-Erden-Metalle auskommt.

Gelöst wird diese Aufgabe durch eine Kreiselpumpe, insbesondere Umwälzpumpe, gemäß den Merkmalen des Anspruchs 1. Vorteilhafte Ausgestaltungen der Kreiselpumpe, insbesondere Umwälzpumpe, sind Gegenstand der sich an den Hauptanspruch anschließenden abhängigen Ansprüche.

Gemäß Anspruch 1 wird eine Kreiselpumpe, insbesondere Umwälzpumpe, mit einem Pumpenlaufrad vorgeschlagen, dessen elektrischer Antrieb durch einen Synchronreluktanzmotor gebildet ist. Synchronreluktanzmaschinen zeichnen sich durch einen besonders hohen Wirkungsgrad aus. Bisher wurde aus technischen Gründen ein Einsatz derartiger Motortypen für Umwälzpumpen nicht in Betracht gezogen, da der prinzipbedingte sehr kleine Abstand zwischen Stator und Rotor keine ausreichenden Platzverhältnisse für Schutzmittel bietet, die stromführende Komponenten des Motors vor in den Motorraum eindringendem Fördermedium schützen. Eine Vergrößerung dieses Abstands würde jedoch zu einer Verschlechterung des Motorwirkungsgrades führen.

Für die Integration eines Synchronreluktanzmotors als Antriebsaggregat einer Kreiselpumpe, insbesondere Umwälzpumpe, wird folglich wenigstens ein geeignetes Trennmittel benötigt, das zumindest die stromleitenden Elemente des Stators vor dem eindringenden Fördermedium schützt. In der Regel stellen die Wicklungsstränge bzw. Wickelköpfe die stromleitenden Elemente des Stators dar.

Zudem zeichnet sich die erfindungsgemäße Kreiselpumpe, insbesondere Umwälzpumpe, dadurch aus, dass der Abstand A zwischen den magnetisch wirksamen Bauteilen des Statorblechpakets und des Rotorblechpaketes kleiner oder gleich 3% des Statorbohrungsdurchmessers ist. Die magnetisch wirksamen Bauteile sind beispielsweise die verwendeten weichmagnetischen Blechschnitte des Rotor- und Statorpaketes. Für die Abstandsbemessung bzw. -definition wird eine etwaige Beschichtung der Blechschnitte ohne wesentlichen Einfluss auf den magnetischen Fluss nicht miteingerechnet.

Durch diese Abstandsvorgabe erfüllt die erfindungsgemäße Kreiselpumpe, insbesondere Umwälzpumpe, den gesetzlich geforderten Mindestwirkungsgrad, bietet jedoch im Luftspalt ausreichend Platz für die Integration wenigstens eines geeigneten Trennmittels zum Schutz stromführender Elemente des Stators.

Der Rotor des Synchronreluktanzmotors kann ausschließlich nach dem Reluktanzprinzip arbeiten, d.h. der Rotor setzt sich aus einem Blechpaket aus weichmagnetischem Material zusammen, in das in üblicher Art und Weise Flusssperren eingebracht sind. Die Flusssperren sind luftgefüllt oder mit einem diamagnetischen oder paramagnetischen Material gefüllt. Als Vorbild für die Blechschnittgeometrie gilt vorzugsweise das bekannte Vagati-Design gemäß dem US-Patent 5,818,140.

Optional kann der Rotor zusätzlich mit Permanentmagneten versehen sein, die vorzugsweise innerhalb der Flusssperren eingebracht sind, um dort den magnetischen Fluss zu hemmen. Alternativ oder zusätzlich kann der Stator des Synchronreluktanzmotors ein oder mehrere Permanentmagnete umfassen. Die Einbringung ein oder mehrerer Permanentmagnete entweder auf Rotorseite oder alternativ auf Statorseite bzw. sowohl auf Rotor- und Statorseite gestattet eine Vergrößerung des Luftspaltes zwischen den beiden Komponenten ohne größere Wirkungsgradverluste in Kauf nehmen zu müssen.

In einer weiteren optionalen Ausgestaltung kann der Synchronreluktanzmotor einen Kurzschlusskäfig aufweisen, wodurch insbesondere ein Linestart-fähiger Motor geschaffen wird, d.h. der Synchronreluktanzmotor kann ohne Frequenzumrichter an einer konstanten Netzspannung anlaufen.

Der Stator des Synchronreluktanzmotors kann beispielsweise mit einer verteilten Drehwicklung ausgestattet sein. Alternativ bietet sich auch ein Stator mit einer konzentrierten Drehfeldwicklung an, die auch als Zahnspulenwicklung bezeichnet wird.

Eine weitere Alternative zur Verwirklichung des Stators wird darin gesehen, diesen mit einer Drehfeldwicklung auszustatten, deren Stränge im Motorbetrieb sequentiell beschaltbar sind. Eine geeignete sequentielle Beschaltung führt dazu, dass sich die Strangströme aus Blöcken konstanter Stromwerte zusammensetzen, die sich im Motorbetrieb sequentiell ändern lassen. Durch diese Vorgehensweise lässt sich die Zahl der Statorzähne im Vergleich zu konventionell bewickelten Reluktanzmaschinen reduzieren. Es wird auf die nichtveröffentlichte deutsche Patentanmeldung mit dem amtlichen Aktenzeichen 102014019278.4 verwiesen, auf deren Inhalt an dieser Stelle vollumfänglich Bezug genommen wird.

Gemäß einer bevorzugten Ausgestaltung der Erfindung beträgt der Abstand A weniger als 2,5% des Statorbohrungsdurchmessers, weiter bevorzugt weniger als 2%. Besonders bevorzugt ist es, wenn der Abstand A kleiner als 1,5% des Statorbohrungsdurchmessers ist oder weiterhin besonders bevorzugt weniger als 1% des Statorbohrungsdurchmessers ausmacht. Im Idealfall beträgt der Abstand A weniger als 0,5% des Statorbohrungsdurchmessers. Dadurch lässt sich ein optimaler Wirkungsgrad der Synchronreluktanzmaschine erzielen.

Durch die Wahl eines geeigneten Trennmittels zum Schutz der stromführenden Elemente des Stators kann ein solch kleiner Abstand realisiert werden und die erfindungsgemäße Kreiselpumpe, insbesondere Umwälzpumpe, die gesetzlich geforderten Mindestwirkungsgrade erreichen.

Erfindungsgemäß ist der Motor als Nassläufer ausgeführt, wobei der Stator durch ein Trennmittel vollständig vor dem in den Motorraum eindringenden Fördermedium geschützt ist. Als erfindungsgemäße Ausgestaltung des Trennmittels erweist sich hierbei der Einsatz eines Spaltrohrs, das in den Luftspalt zwischen Rotor und Stator eingebracht ist. Das Spaltrohr kann gemäß einer bevorzugten Ausgestaltung aus einem Faserverbundwerkstoff gefertigt sein. Dadurch lassen sich besonders dünnwandige Spaltrohre erreichen, die ausreichend Platz im begrenzten Luftspalt zwischen Rotor und Stator finden.

Als weitere Trennmittel dienen in diesem Fall erfindungsgemäß ein oder mehrere Nutkeile, die in zumindest einen Teil der Nutöffnungen zwischen den Statorzähnen eingesetzt sind. Dadurch wird die den Wicklungsstrang führende Nut gegenüber dem Motorraum abgedichtet und vor eintretendem Fördermedium geschützt. Denkbar ist es, die Nutkeile als separate Bauteile auszuführen, die einzeln in die jeweiligen Nutöffnungen eingeschoben sind. Für ausreichenden Druckschutz sorgt ein speziell ausgeformter Absatz der Statorzähne, an den sich zugeordnete Anschlagflächen der Nutkeile anlegen, um nicht zu weit in die Nut eingedrückt zu werden. Durch den im Luftspalt vorherrschenden Druck werden die eingeführten Nutkeile ausreichend dichtend an die Statorzähne gepresst.

Erfindungsgemäß ist es vorgesehen, dass ein oder mehrere einzelne Nutkeile über zwei gemeinsame Endringe miteinander verbunden sind. Erfindungsgemäß ist ein Aufbau mit zwei unterschiedlich großen Endringen, die eine Art Käfig bilden. Bei ordnungsgemäßer Montage liegt ein erster vom Umfang kleinerer Endring an der Innenwand der Statorbohrung an, während ein zweiter vom Umfang größerer Endring an der Statorstirnseite anschlägt. Dadurch wird eine Art Käfig ausgeformt, der optional eine zusätzliche Statorbeschichtung ermöglicht. Erfindungsgemäß sind ein oder mehrere Nutkeile direkt auf der Oberfläche des Spaltrohres angeordnet

Für alle vorgenannten Ausführungsformen bestehen für die Ausgestaltung des Rotorblechpaketes unterschiedliche Optionen. In jedem der vorgenannten Ausführungsbeispiele kann das Rotorblechpaket in direktem Kontakt zum Fördermedium stehen, da dieses keine stromleitenden Elemente umfasst. Alternativ ist es jedoch vorstellbar, das Rotorblechpaket zumindest teilweise durch eine geeignete Beschichtung vor möglichen Korrosionseffekten bzw. Druckeinflüssen des Fördermediums zu schützen. Alternativ oder zusätzlich zur Beschichtung kann der Rotor auch durch eine diesen vollständig oder zumindest teilweise umfassende Rotorhülse vor dem Fördermedium getrennt und geschützt sein.

Neben dem Korrosionsproblem besteht ein weiteres Problem darin, dass das in die Rotorstruktur eintretende Fördermedium, insbesondere das in die Flusssperren eintretende Fördermedium, Stabilitätsprobleme der Rotorkonstruktion im Motorbetrieb hervorrufen kann. Insbesondere kann eine dadurch bedingte geänderte Gewichtsverteilung zu hohen strukturellen Belastungen des Rotors führen. In diesem Zusammenhang ist es sinnvoll die Flusssperren durch wenigstens ein Abdichtungsmittel gegenüber eintretendem Fördermedium abzudichten. Idealerweise sind die Flusssperren in axialer Richtung vollständig bzw. nahezu vollständig mit einem geeigneten Dichtmittel verfüllt.

Weitere Vorteile und Eigenschaften der Erfindung sollen im Folgenden anhand mehrerer in den Figuren dargestellter Ausführungsbeispiele näher erläutert werden. Es zeigen:
- Figur 1:: eine Ausführungsvariante der erfindungsgemäßen Umwälzpumpe;
- Figur 2:: eine nicht erfindungsgemäße Ausführungsvariante der Umwälzpumpe;
- Figur 3:: eine weitere nicht erfindungsgemäße Ausführungsvariante der Umwälzpumpe;
- Figur 4:: eine weitere nicht erfindungsgemäße Ausführungsvariante der Umwälzpumpe;
- Figur 5:: Detaildarstellungen mit Nutkeilen abgedichteter Statornuten und
- Figur 6:: eine nicht erfindungsgemäße Variante eines Nutkeilkäfigs (6a) und eine erfindungsgemäße Variante eines Nutkeilkäfigs (6b).

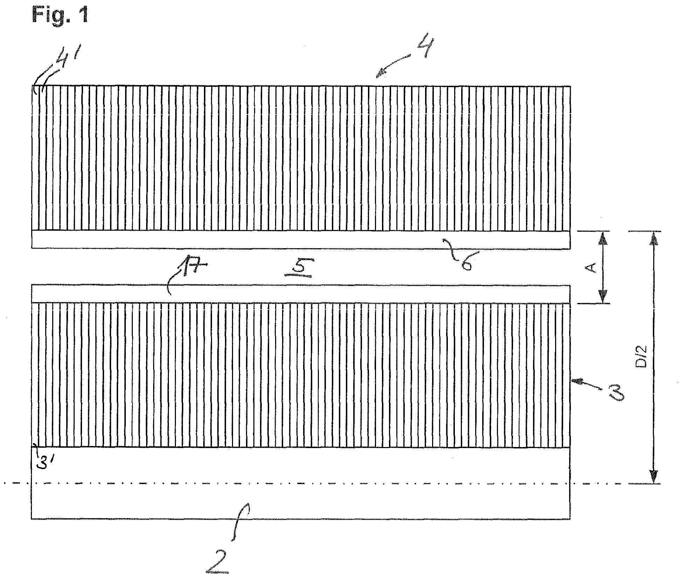

Die nachfolgenden Erläuterungen beziehen sich auf eine Umwälzpumpe, die Ausführungen gelten jedoch ohne Einschränkung generell für jede Form einer Kreiselpumpe. Die Figuren 1 bis 4 zeigen unterschiedliche Ausführungsvarianten der Umwälzpumpe, insbesondere zeigen die Figuren Teilauschnitte des verwendeten Synchronreluktanzmotors zum Antrieb der Umwälzpumpe, der integraler Bestandteil des Pumpengehäuses ist. Der Basisaufbau ist für alle Varianten gleich, d.h. das Antriebsaggregat umfasst ein Motorgehäuse 1 mit einer gelagerten Welle 2. Auf der Welle sitzt ein Rotor 3, der in der Statorbohrung des außenliegenden Stators 4 läuft. Sowohl Rotor 3 als auch Stator 4 sind aus einzelnen Blechschnitten 3', 4' zu jeweils einem Blechpaket in axialer Richtung gestapelt. Zwischen dem Rotorblechpaket 3 und dem Statorblechpaket 4 liegt ein Luftspalt 5. Die Blechschnitte 3' des Rotors 3 sind vorzugsweise nach dem Vagati-Design gemäß US-Patent US 5,818,140 mit Flusssperren versehen, wobei Abweichungen zum Vagati-Design natürlich nicht ausgeschlossen sind. Rotor 3 und Stator 4 können beide oder nur einer von beiden mit Permanentmagneten ausgestattet sein. Zudem kann der Rotor 3 optional einen Anlaufkäfig umfassen.

Der Stator kann eine verteilte Drehfeldwicklung oder eine konzentrierte Drehfeldwicklung umfassen. Alternativ ist eine Drehfeldwicklung denkbar, bei der die Stränge mit zueinander phasenverschobenen Strömen bestromt werden und die Bestromungszustände in Abhängigkeit des Rotorwinkels sprunghaft geändert werden. Insbesondere kann für die Definition der Strangströme eine trigonometrische Stromfunktion gewählt wird, wobei der Bestromungswinkel sequentiell um einen definierten delta-Bestromungswinkel weitergeschaltet wird. Durch diese Maßnahme lässt sich die Zahl der benötigten Statorzähne reduzieren. Es wird auf die nichtveröffentlichte deutsche Patentanmeldung mit dem amtlichen Aktenzeichen 102014019278.4 verwiesen, auf deren Inhalt an dieser Stelle vollumfänglich Bezug genommen wird.

Erfindungsgemäß ist bei allen vier Varianten der Figuren 1 bis 4 der Abstand A zwischen den magnetisch wirksamen Materialien des Rotors 3 sowie des Stators 4 kleiner oder gleich 3% des Bohrungsdurchmessers D des Stators 4 gewählt. Besser ist es, wenn der Abstand A kleiner oder gleich 2,5%, kleiner oder gleich 2%, kleiner oder gleich 1,5%, kleiner oder gleich 1% bzw. im Idealfall kleiner oder gleich 0,5% des Durchmessers der Statorbohrung ist. D/2 berechnet sich dabei ausgehend von der Mittelachse des Motors bzw. der Welle 2 bis zum innenliegenden Umfang des Statorpaketes 4.

Durch diese Vorgabe wird ein ausreichender Wirkungsgrad der Pumpe sichergestellt. Da insbesondere bei Umwälzpumpen das Antriebsaggregat unmittelbar in die Pumpe integriert ist, ist auch das Aggregat selbst dem Fördermedium ausgesetzt. Dies erfordert Schutzmaßnahmen um gewisse Motorteile wie die stromführenden Elemente des Stators vor dem in den Motorraum eintretenden Fördermedium zu schützen. Die erfindungsgemäße Dimensionierung des Luftspaltes bietet nun auch bei einer Umwälzpumpe mit Synchronreluktanzmotor ausreichend Platz für die Integration des benötigten Trennmittels. Aufgabe des Trennmittels ist der Schutz gewisser Motorkomponenten, insbesondere die Wicklungsstränge bzw. Wickelköpfe des Stators 4, vor in den Motorraum eintretendem Fördermedium, als auch vor den im Betrieb möglicherweise vorliegenden Druckdifferenzen.

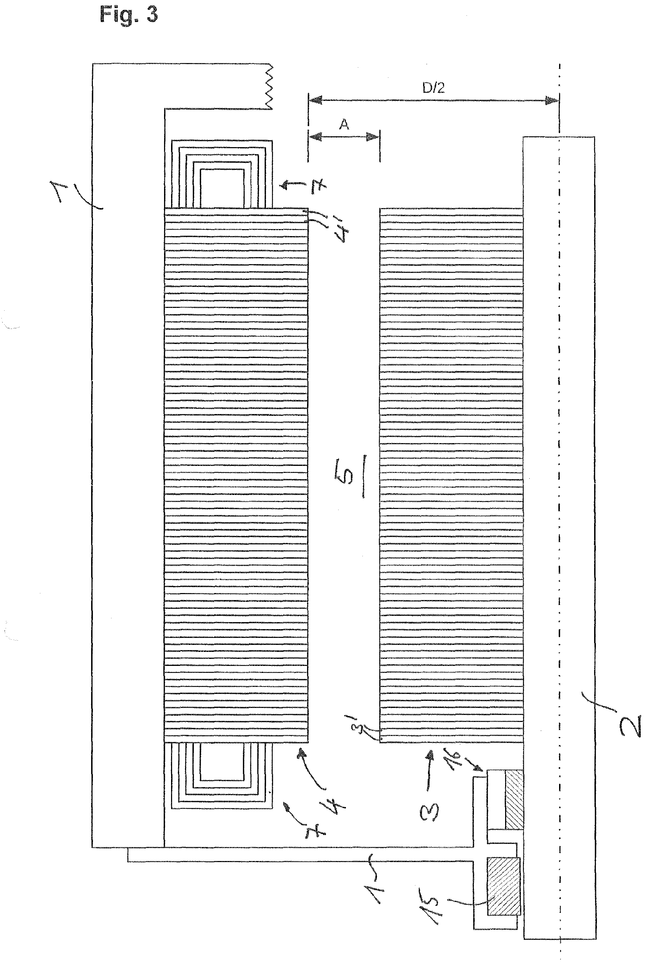

Die dargestellten Varianten der Figuren 1 bis 4 unterscheiden sich in der Ausgestaltung des Trennmittels. In den Varianten in Figuren 1, 2 und 4 ist die Synchronreluktanzmaschine als Nassläufer ausgeführt. Die nicht erfindungsgemäße Variante gemäß Figur 3 arbeitet demgegenüber als Trockenläufer, das Trennmittel verhindert somit jeglichen Eintritt von Flüssigkeit in den Motorraum.

Gemäß dem ersten Ausführungsbeispiel, gezeigt in Figur 1, ist der Stator 4 vollständig vom Luftspalt 5 durch ein integriertes Spaltrohr 6 getrennt, um die Statorwicklungen als auch das gesamte Statorpaket vor dem eintretenden Fördermedium zu schützen. Es handelt sich quasi um einen Nassläufer 3 mit trockenem Stator 4. Das eingesetzte Spaltrohr 6 kann aus einem Faserverbundwerkstoff gefertigt sein, wodurch sich ein besonders dünnwandiges Spaltrohr produzieren lässt, das das vorliegende Platzangebot im Luftspalt 5 optimal ausnutzt.

Optimal kann der Rotor 3 eine Beschichtung umfassen, die idealerweise über den vollständigen äußeren Umfang des Rotorpaketes 3 aufgetragen ist. Die Beschichtung soll den Rotor 3 explizit vor Korrosion schützen und gegebenenfalls ein Eindringen des Fördermediums in das Blechpaket 3 bzw. die Flusssperren verhindern. Alternativ kann der Rotor 3, wie in Figur 1 dargestellt, auch durch eine passende Rotorhülse 17 umgeben sein. Es spricht jedoch nichts dagegen, das Rotorblechpaket 3 unmittelbar dem Fördermedium auszusetzen.

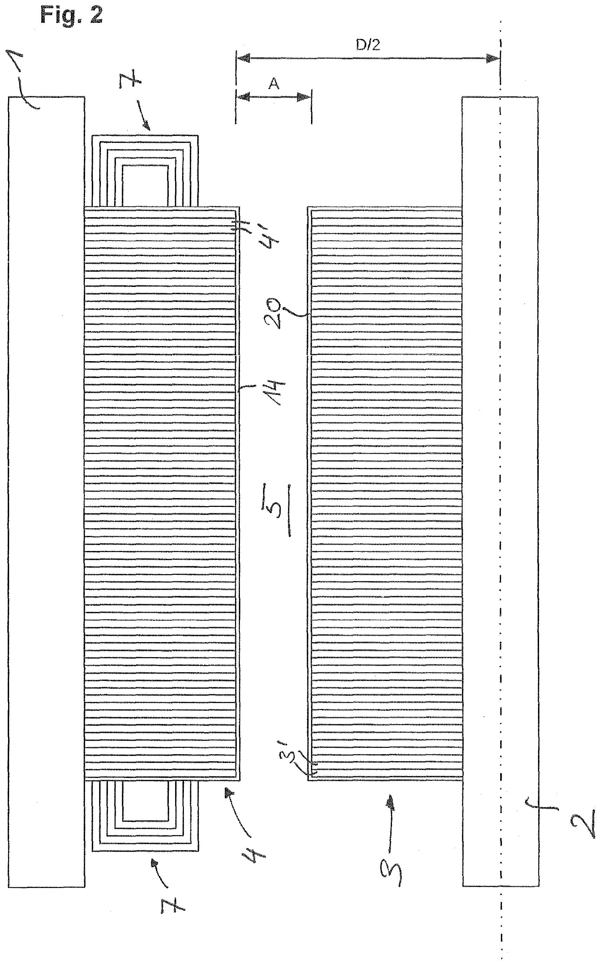

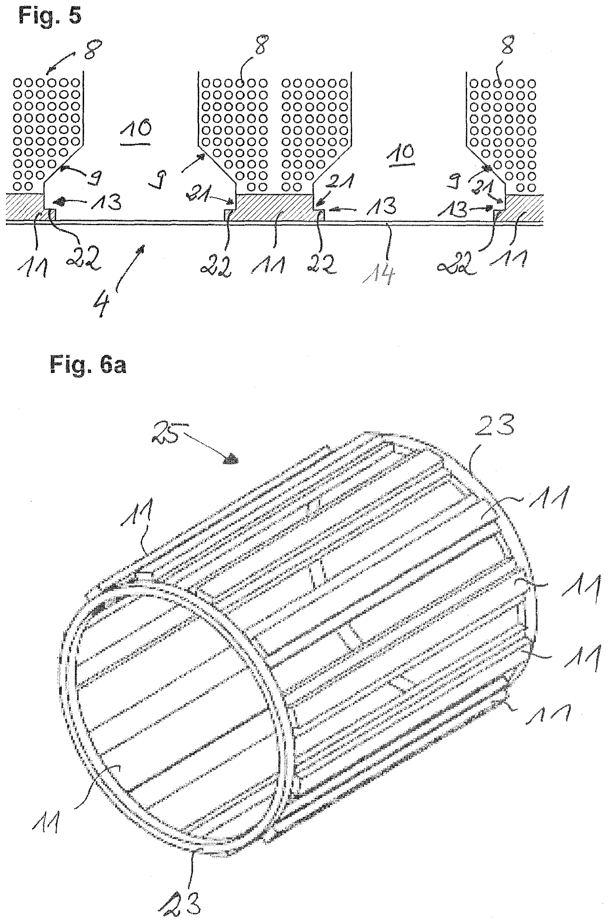

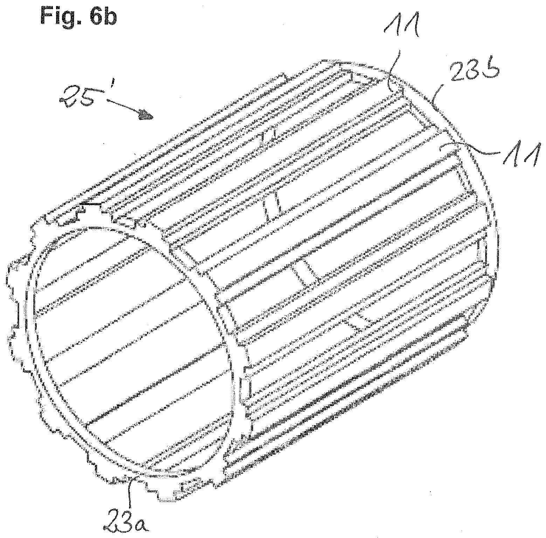

Der grundlegende Aufbau der Motorvariante gemäß Figur 2 entspricht dem der Figur 1, in der nicht erfindungsgemäßen Variante gemäß Figur 2 ist der Stator jedoch nicht durch ein Spaltrohr geschützt, sondern die Wickelköpfe bzw. Wicklungen 7 werden vollständig von dem Fördermedium umströmt. Es handelt sich folglich um einen Nassläufer mit nassem Stator 4. Zum Schutz der stromleitenden Elemente sind diese isoliert, beispielsweise durch eine PVC-Ummantelung der Wicklungsstränge. Alternativ oder zusätzlich kann es ebenso vorgesehen sein, dass die in den Statornuten 9 platzierten Wicklungen 8, siehe hierzu beispielsweise Figur 5, durch in die Nutöffnungen 13 eingesetzte Nutkeile 11 vor dem Fördermedium im Luftspalt 5 geschützt sind. Die passgenauen Nutkeile 11 sind in die Öffnungen 13 der Statornuten 9 eingesetzt, um den Hohlraum der Nuten 9 nach außen abzudichten. Die konkrete Ausgestaltung der Nutkeile 11 bzw. deren Befestigung innerhalb der Nuten 9 zwischen zwei Statorzähnen 10 soll zu einem späteren Zeitpunkt anhand der Figuren 5, 6a, 6b beschrieben werden.

Zusätzlich zu der gezeigten Isolierung der Wicklungsköpfe 7 in der Variante gemäß der Figur 2 kann der Stator 4 ergänzend durch eine geeignete Beschichtung 14 vor dem Fördermedium geschützt werden. Eine entsprechende Statorbeschichtung 14 wird hierbei vollständig auf dem Außenumfang des Stators 4 aufgebracht und schützt damit die einzelnen Statorbleche 4' vor Korrosion.

Gleiches könnte in der Variante gemäß Figur 2 auch für den Rotor 3 vorgenommen werden, der entsprechend durch eine Beschichtung 20 oder alternativ durch eine passgenaue Rotorhülse geschützt werden kann. Es spricht jedoch nichts dagegen, das Rotorblechpaket 3 dem Fördermedium unmittelbar auszusetzen.

In der dritten, nicht erfindungsgemäßen Ausführungsform gemäß Figur 3 ist der grundlegende Aufbau des Motors 3 und des Stators 4 wieder identisch zu den Varianten gemäß den Figuren 1 und 2. In der Variante gemäß Figur 3 wird jedoch der gesamte Motorraum gegenüber dem Fördermedium abgedichtet, d.h. es wird ein Trockenläufer realisiert. Das Motorgehäuse 1 bzw. die Rotorwelle 2 ist über eine entsprechende Dichtung 16 gegenüber dem Fördermedium abgedichtet, wobei hinter einem Gleitlager 15 an der Gehäusekante zum Motorraum eine passende Wellendichtung 16 zwischen Rotorwelle 2 und Motorgehäuse 1 angebracht ist. Dabei kann es sich um eine Gleitringdichtung handeln. Auf der gegenüberliegenden Seite der Welle befindet sich üblicherweise ein Wälzlager.

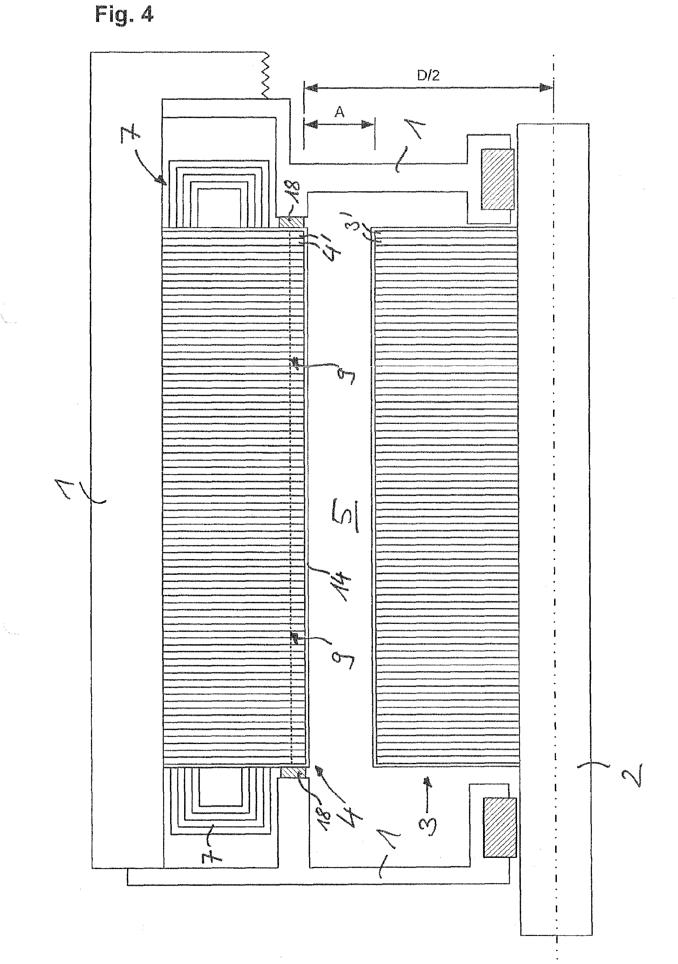

Die vierte, nicht erfindungsgemäße Ausführungsvariante gemäß Figur 4 zeigt eine Mischform der beiden voranstehenden Ausführungsbeispiele. Hierbei wird ein Nassläufer realisiert, wobei jedoch Teile des Stators 4 durch passende Flachdichtungen 18 trockengelegt werden. In den Motorraum ragende Dichtungshalterungen 19 des Gehäuses 1 pressen die Flachdichtungen 18 gegen beide Stirnseiten des Stators 4. Dadurch werden die Wickelköpfe 7 des Stators 4 trocken gelegt und vor dem Fördermedium geschützt. Zudem kann der Stator 4 durch eine geeignete Beschichtung 14 vor dem Fördermedium geschützt werden. Gleiches gilt üblicherweise für den Rotor 1, der entweder mit einer Beschichtung 20 oder auch mit einer Rotorhülse 17 versehen ist.

Auch in dieser Ausführungsvariante können passende Nutkeile 11 vorgesehen sein, um die Wicklungen 8 innerhalb der Statornuten 9 gesondert vor dem Fördermedium zu schützen. Zur Ausführung der Nutkeile 11 wird auf die Figuren 5 bzw. 6a, 6b verwiesen. Hierbei zeigt die Figur 5 Statorzähne 10, wobei jeweils zwischen zwei Zähnen 10 eine Statornut 9 liegt. Die zum Luftspalt gerichteten Nutöffnungen 13 werden durch passende Nutkeile 11 abgedichtet. Dabei ist ersichtlich, dass an den Statorzähnen 10 entsprechende Absätze 21 ausgeformt sind, die gegen zugeordnete Anschläge 22 der Nutkeile 11 gegengepresst werden. Dadurch wird verhindert, dass die Nutkeile 11 vollständig in die Nutöffnung 13 eingedrückt werden, jedoch durch den vorherrschenden Druck des Fördermediums eine ausreichende Anpresskraft der Nutkeile 11 gewährleistet ist, um den Hohlraum der verschlossenen Nuten 9 ausreichend abzudichten.

Die Nutkeile können als einzelne Bauteile ausgestaltet sein. Gemäß der nicht erfindungsgemäßen Figur 5 wird das Statorpaket 4 durch eine zusätzliche Beschichtung 14 überdeckt, die auch über die Nutkeile 11 gelegt wird.

Eine nicht erfindungsgemäße Ausführungsform ist der Figur 6a zu entnehmen. Eine erfindungsgemäße Ausführungsform ist der Figur 6b zu entnehmen. Hierbei sind die einzelnen Nutkeile durch passende Endringe 23 miteinander verbunden. Ein derartiger Nutkeilkäfig 25 lässt sich bequem in Wellenrichtung in den Motorraum zwischen Rotor 3 und Stator 4 einschieben.

Die erfindungsgemäße Ausführungsform des Nutteilkäfigs 25' ist in Figur 6b dargestellt. Hier weisen beide Endringe 23a, 23b unterschiedliche Durchmesser auf. Der Endring 23a mit kleinerem Durchmesser legt sich in der Einbauposition an die Innenwandung der Statorbohrung an, während der Endring 23b größer als die Statorbohrung dimensioniert ist und daher in der Einbaustellung an der Statorstirnseite anschlägt. Dies vereinfacht den Einbau und die korrekte Positionierung. Die unterschiedlich dimensionierten Endringe 23a, 23b sind dadurch erkennbar, dass die Keile 11 auf dem kleineren Endring 23a oben auf liegen, während die Keile 11 an den größeren Ring 23b seitlich angrenzen.

## Patentansprüche

1. Kreiselpumpe, insbesondere Umwälzpumpe, mit einem Pumpenlaufrad und einem integrierten Motor zum Antrieb des Laufrades, wobei der Motor ein Nassläufer ist, wobei Trennmittel zum Schutz der stromleitenden Elemente des Stators (4) vor dem Fördermedium vorgesehen sind, wobei der Motor ein Synchronreluktanzmotor mit einem Rotor aus einem Blechpaket aus weichmagnetischem Material, in das Flusssperren eingebracht sind, ist, wobei der Abstand A zwischen den magnetisch wirksamen Bauteilen des Statorblechpaketes (4) und des Rotorblechpaketes (3) kleiner oder gleich 3% des Statorbohrungsdurchmessers ist, wobei der Stator (4) durch ein Spaltrohr (6) vollständig vom Fördermedium geschützt ist, wobei das Spaltrohr (6) in den Luftspalt (5) zwischen Rotor (3) und Stator (4) eingebracht ist, wobei als weiteres Trennmittel ein oder mehrere Nutkeile (11) zur Abdichtung ein oder mehrerer Statornuten (9) vorgesehen sind, um innerhalb der Nut (9) liegende stromleitende Elemente vor dem Fördermedium zu schützen, wobei die Nutkeile (11) sich an Absätzen der Statorzahnkanten abstützen und auf der Oberfläche des Spaltrohres (6) angeordnet sind, wobei die Nutkeile (11) über zwei gemeinsame Endringe (23, 23a, 23b) miteinander verbunden sind, um einen Nutkeilkäfig zu bilden, wobei nach Einschieben des Nutkeilkäfigs in den Stator einer der Endringe (23a) an der Innwandung der Statorbohrung anlegt und der zweite Endring (23b) an der Statorstirnseite anschlägt.

2. Kreiselpumpe nach Anspruch 1, **dadurch gekennzeichnet, dass** der Abstand A weniger als 2,5% des Statorbohrungsdurchmessers, bevorzugt weniger als 2%, weiter bevorzugt weniger als 1,5%, besonders bevorzugt weniger als 1% und idealerweise weniger als 0,5% beträgt.

3. Kreiselpumpe nach einem der vorhergehenden Ansprüche, **dadurch gekennzeichnet, dass** das Rotorblechpaket (3) in direktem Kontakt zum Fördermedium steht oder ganz oder teilweise durch eine Beschichtung (20) und/oder Rotorhülse (17) vom Fördermedium getrennt ist.

4. Kreiselpumpe nach einem der vorhergehenden Ansprüche, **dadurch gekennzeichnet, dass** die Flusssperren des Rotors (3) durch ein Abdichtungsmittel zumindest teilweise verfüllt sind, um den Rotor (3) gegen ein Eindringen des Fördermediums abzudichten.

5. Kreiselpumpe nach einem der vorhergehenden Ansprüche, **dadurch gekennzeichnet, dass** die Flusssperren des Rotors (3) und/oder der Stator (4) ein oder mehrere Permanentmagnete umfassen bzw. umfasst.

6. Kreiselpumpe nach einem der vorhergehenden Ansprüche, **dadurch gekennzeichnet, dass** der Synchronreluktanzmotor einen Anlaufkäfig umfasst.

7. Kreiselpumpe nach einem der vorhergehenden Ansprüche, **dadurch gekennzeichnet, dass** der Stator (4) eine verteilte Drehfeldwicklung oder eine konzentrierte Drehfeldwicklung oder eine Drehfeldwicklung mit sequentiell beschalteten Strängen umfasst.

## Claims

1. Centrifugal pump, in particular circulation pump, having a pump impeller and having an integrated motor for driving the impeller, wherein the motor is a wet-rotor motor, wherein provision is made of separating means for protecting the current-conducting elements of the stator (4) from the delivery medium, wherein the motor is a synchronous reluctance motor having a rotor composed of a laminated core made of soft magnetic material, in which laminated core flux barriers are incorporated, wherein the distance A between the magnetically active components of the stator laminated core (4) and of the rotor laminated core (3) is less than or equal to 3% of the stator bore diameter, wherein the stator (4) is protected completely from the delivery medium by a can (6), wherein the can (6) is incorporated in the air gap (5) between rotor (3) and stator (4), wherein provision is made, as further separating means, of one or more groove wedges (11) for sealing off one or more stator grooves (9), in order to protect current-conducting elements situated within the groove (9) from the delivery medium, wherein the groove wedges (11) are supported against shoulders of the stator tooth edges and are arranged on the surface of the can (6), wherein the groove wedges (11) are connected to one another via two common end rings (23, 23a, 23b) so as to form a groove-wedge cage, wherein, after the groove-wedge cage has been pushed into the stator, one of the end rings (23a) bears against the inner wall of the stator bore and the second end ring (23b) abuts against the stator face side.

2. Centrifugal pump according to Claim 1, **characterized in that** the distance A is less than 2.5%, preferably less than 2%, more preferably less than 1.5%, particularly preferably less than 1%, and ideally less than 0.5%, of the stator bore diameter.

3. Centrifugal pump according to one of the preceding claims, **characterized in that** the rotor laminated core (3) is in direct contact with the delivery medium or is separated completely or partially from the delivery medium by a coating (20) and/or rotor sleeve (17).

4. Centrifugal pump according to one of the preceding claims, **characterized in that** the flux barriers of the rotor (3) are filled at least partially by a sealing means in order to seal off the rotor (3) against ingress of delivery medium.

5. Centrifugal pump according to one of the preceding claims, **characterized in that** the flux barriers of the rotor (3) and/or the stator (4) comprise(s) one or more permanent magnets.

6. Centrifugal pump according to one of the preceding claims, **characterized in that** the synchronous reluctance motor comprises a starting cage.

7. Centrifugal pump according to one of the preceding claims, **characterized in that** the stator (4) comprises a distributed rotating-field winding or a concentrated rotating-field winding or a rotating-field winding with sequentially connected phases.

## Revendications

1. Pompe centrifuge, notamment pompe de circulation, comprenant une roue mobile de pompe et un moteur intégré pour l'entraînement de la roue mobile, le moteur étant un induit noyé, des moyens de séparation étant prévus pour protéger les éléments conducteurs de courant du stator (4) du fluide de transport, le moteur étant un moteur à réluctance synchrone avec un rotor composé d'un paquet de tôles en matériau magnétique doux, dans lequel sont introduites des barrières de flux, la distance A entre les composants à effet magnétique du paquet de tôles du stator (4) et du paquet de tôles du rotor (3) étant inférieure ou égale à 3 % du diamètre de l'alésage du stator, le stator (4) étant entièrement protégé du fluide de transport par un tube d'entrefer (6), le tube d'entrefer (6) étant introduit dans l'entrefer (5) entre le rotor (3) et le stator (4), une ou plusieurs cales d'encoche (11) étant prévues comme moyen de séparation supplémentaire pour l'étanchéification d'une ou plusieurs encoches de stator (9), afin de protéger des éléments conducteurs de courant situés à l'intérieur de l'encoche (9) du fluide de transport, les cales d'encoche (11) s'appuyant sur des épaulements des bords des dents du stator et étant agencées sur la surface du tube d'entrefer (6), les cales d'encoche (11) étant reliées entre elles par deux anneaux d'extrémité communs (23, 23a, 23b) pour former une cage de cales d'encoche ; après l'insertion de la cage de cales d'encoche dans le stator, l'un des anneaux d'extrémité (23a) s'appliquant contre la paroi intérieure de l'alésage de stator et le deuxième anneau d'extrémité (23b) venant en butée contre le côté frontal de stator.

2. Pompe centrifuge selon la revendication 1, **caractérisée en ce que** la distance A est inférieure à 2,5 % du diamètre de l'alésage du stator, de préférence inférieure à 2 %, de manière davantage préférée inférieure à 1,5 %, de manière particulièrement préférée inférieure à 1 % et idéalement inférieure à 0,5 %.

3. Pompe centrifuge selon l'une quelconque des revendications précédentes, **caractérisée en ce que** le paquet de tôles du rotor (3) est en contact direct avec le fluide de transport ou est séparé totalement ou partiellement du fluide de transport par un revêtement (20) et/ou une enveloppe de rotor (17).

4. Pompe centrifuge selon l'une quelconque des revendications précédentes, **caractérisée en ce que** les barrières de flux du rotor (3) sont au moins partiellement remplies par un moyen d'étanchéité pour étanchéifier le rotor (3) contre une pénétration du fluide de transport.

5. Pompe centrifuge selon l'une quelconque des revendications précédentes, **caractérisée en ce que** les barrières de flux du rotor (3) et/ou du stator (4) comprennent un ou plusieurs aimants permanents.

6. Pompe centrifuge selon l'une quelconque des revendications précédentes, **caractérisée en ce que** le moteur à réluctance synchrone comprend une cage de démarrage.

7. Pompe centrifuge selon l'une quelconque des revendications précédentes, **caractérisée en ce que** le stator (4) comprend un enroulement à champ rotatif réparti ou un enroulement à champ rotatif concentrique ou un enroulement à champ rotatif avec des brins connectés séquentiellement.
